# EUROPEAN PATENT SPECIFICATION

(11) **EP 1 711 299 B1**
(45) Date of publication and mention of the grant of the patent: **06.10.2010**
(21) Application number: 04804150.3
(22) Date of filing: 21.12.2004
(51) Int. Cl.: B23K 9/133, B65H 49/12, B65D 85/04

(54) **COVER FOR WELDING WIRE CONTAINER**
ABDECKUNG ZUM SCHWEISSEN EINES DRAHTBEHÄLTERS
COUVERCLE POUR RECEPTACLE DE FIL A SOUDER

(30) Priority: 22.12.2003 DE 10360466
(43) Date of publication of application: 18.10.2006
(73) Proprietor: SIDERGAS SpA, 37010 S. Ambrogio di Valpolicella (IT)
(72) Inventor: GELMETTI, Carlo, I-37017 Lazise (IT)
(74) Representative: Prinz & Partner
(86) International application number: PCT/EP2004/014554
(87) International publication number: WO 2005/061168

(56) References cited:
- WO-A-02/094493
- US-A- 6 016 911
- US-A1- 2003 042 163
- PATENT ABSTRACTS OF JAPAN vol. 009, no. 226 (M-412), 12 September 1985 (1985-09-12) & JP 60 082275 A (KOBE SEIKOSHO KK), 10 May 1985 (1985-05-10)
- PATENT ABSTRACTS OF JAPAN vol. 009, no. 226 (M-412), 12 September 1985 (1985-09-12) & JP 60 082276 A (KOBE SEIKOSHO KK), 10 May 1985 (1985-05-10)

## Description

The invention relates to the combination of a cover and a welding wire container according to the preamble of claim 1. Such a combination is known from US 2003/0042163.

Welding wire for automatic welding machines is provided in coils, each coil being placed in a container. On top of the container, a cover is provided in order to prevent dirt or other contaminations from entering into the container. The cover typically consists of cardboard or of a plastics material.

In order to continuously feed welding wire to the welding machine, it is known to use two containers, namely a first container which currently provides the welding wire, and a second container which is being used as soon as the wire from the first container has been entirely consumed. The end of the welding wire of the first container is joined to the beginning of the welding wire of the second container so that a continuous supply of the welding wire is ensured. After the first container is empty and the welding wire is being withdrawn from the second container, the first container is replaced by a new container, and the beginning of the welding wire of the new container is joined to the end of the welding wire from the container currently used.

Essential for the proper function of such system is that the welding wire does not entangle or kink, in particular when the welding wire of one container has been almost entirely consumed so that the small remaining portion of the welding wire is withdrawn from the container. With known systems, no cover is provided on the container in order to ensure proper switching from one container to the other. Using an open container however results in contamination of the welding wire.

WO 02/094493 shows a system with two containers in which a runner is arranged on the welding wire. The runner is a solid body and is intended to prevent kinks in the wire by means of its weights. However, this solution has proven to not work satisfactorily.

The object of the invention is to provide a cover and a welding wire container which prevent entanglement or kinks in the welding wire, in particular when the system is switching from one container to the other, while at the same time allowing to use a cover for closing the container.

To this end, the invention provides a combination of a cover and a welding wire container containing welding wire, the cover having an upper surface provided with a slot through which the welding wire can be withdrawn from the container, **characterized in that** the slot has spacing means which defme an inner portion and an outer portion of the slot such that welding wire extending through the inner portion of the slot is held spaced from welding wire extending through the outer portion of the slot, and in that the spacing means is formed so as to be deflectable such that the welding wire is allowed to pass the spacing means when the spacing means in is in a deflected condition. The invention is based on the recognition that it is possible to combine both a cover for the container so as to prevent dirt and other contaminations from entering into the container, and a means for preventing entanglement of the wire and kinks - in the wire, in particular in the phase in which the system switches from one container to the other. The invention basically consists in provision of a spacing means on a cover, the spacing means holding the two portions of the welding wire of one container spaced apart, namely the portion being fed to the welding machine and the portion extending towards the other container. The cover effectively prevents dirt and other contaminations from entering the container as the slot forms only a very small opening in the cover (less than 1 % of the overall surface).

According to a preferred embodiment of the invention, the spacing means is formed such that its spacing effect can be overcome by the welding wire. This allows the welding wire to escape from the container currently used such that the system can switch to the subsequent container, without any external interference. The pulling force acting on the welding wire when being withdrawn from the container allows to automatically make the spacing means ineffective.

The spacing means can be overcome by either at least partially detaching the spacing means from the cover, by destructing the spacing means or by deflecting the spacing means so as to allow the welding wire to escape through the slot.

In a simple embodiment, the spacing means can be formed by an adhesive strip. The strip is attached to the cover so as to close an intermediate portion of the slot, leaving open an inner portion and an outer portion.

In another embodiment, the spacing means if formed from two narrow portions of the slot. These narrow portions hold the welding wire portions extending through the cover spaced from each other while at the same time allowing the wire to pass through when switching from the currently used container to the subsequent container.

According to an alternative embodiment, the spacing means is formed from a plate attached to the upper surface of the cover. The plate can be attached to the upper surface of the cover on one side of the slot only, which allows the spacing means to be bent upwardly when the welding wire seeks to escape through the slot. As an alternative, the plate could be attached to the cover so as to detach therefrom under the traction force of the welding wire.

According to a preferred embodiment of the invention, the slot in the cover extends from an edge of the cover towards the center and beyond the center. This gives the welding wire a certain freedom of movement, contributing to the prevention of entanglement and kinks.

The invention is now described in detail by means of a preferred embodiment which is shown in the drawings. In the drawings,
Fig. 1 shows a side view of a system using two welding wire containers with covers according to the invention;
Fig. 2 shows a side view of the system of Fig. 1;
Fig. 3 shows in an enlarged view a container according to a first embodiment of the invention;
Fig. 4 shows a perspective view of the cover shown in Fig. 3;
Fig. 5 shows a top view of a cover according to a second embodiment of the invention; and
Fig. 6 shows a top view of a cover according to a third embodiment of the invention.

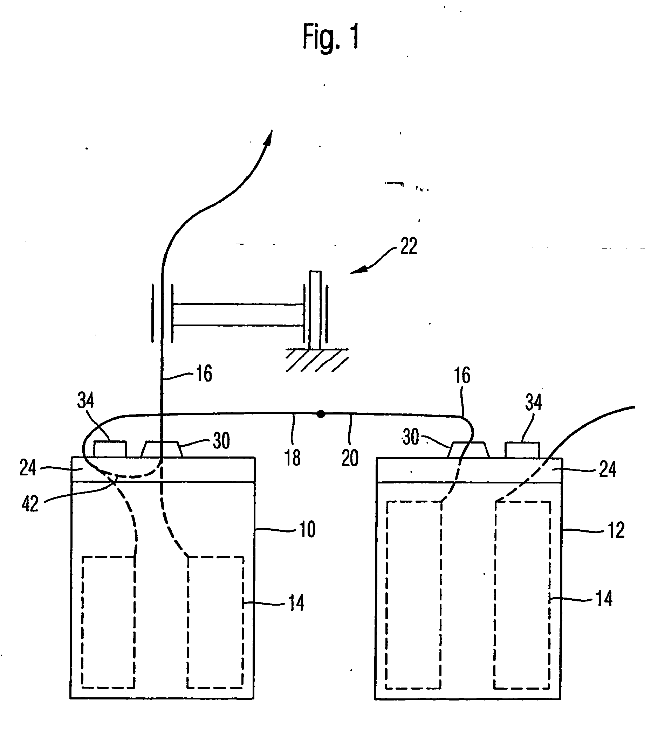

Fig. 1 shows a first welding wire container 10 and a second welding wire container 12. Both welding wire containers contain a coil 14 of welding wire 16. The end portion 18 of the welding wire contained in the first container 10 is joined by a butt welding to the beginning or front portion 20 of the welding wire coil contained in the second container 12. The welding wire 16 is withdrawn from the welding wire containers 10, 12 through a feeding system 22 which is only schematically depicted.

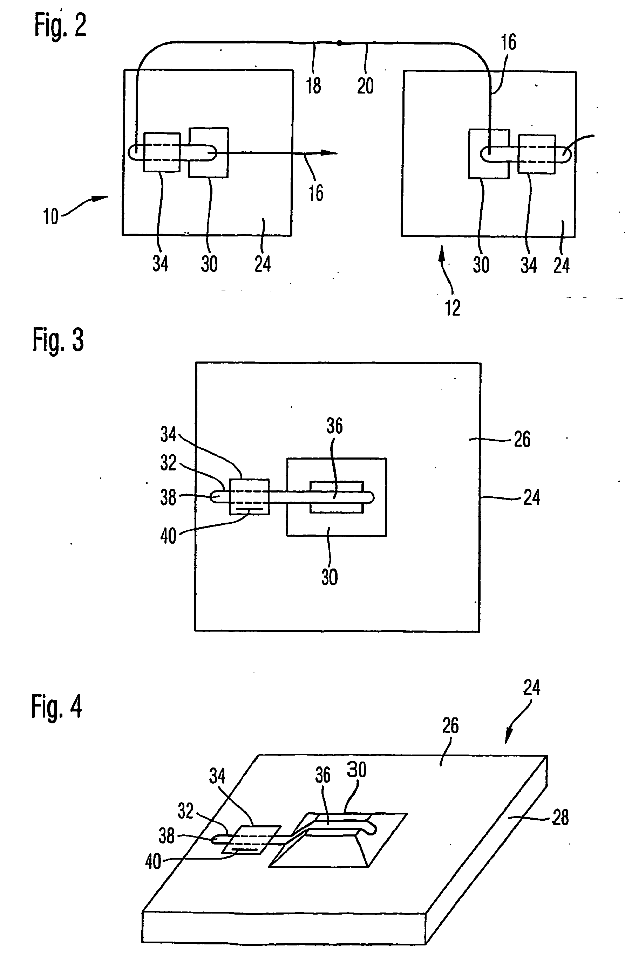

On top of each container 10, 12 a cover 24 (see also Figs. 3 and 4) is arranged. Each cover has an upper surface 26 which closes an upper opening of the respective container, and side walls 28 extending from the upper surface 26 and positioning the cover on the respective container.

In the center of the upper surface 26, a truncated pyramid 30 is provided. Further, a slot 32 is provided in the upper surface 26. The slot 32 extends from an edge of the cover 24 towards and beyond the center of the upper surface 26. As can be seen in Figs. 3 and 4, the slot 32 extends over the left side surface and the upper surface of the truncated pyramid 30 and over almost the entire right side surface.

A spacing means 34 is provided on the upper surface of the cover. The spacing means 34 divides the slot 32 into an inner portion 36 and an outer portion 38. The welding wire feed to the welding machine extends through the inner portion 36 of slot 32, and the end portion of the welding wire coil connected to the forward end of the subsequent welding wire coil extends through the outer portion 38 of the slot 32.

The spacing means 34, in the preferred embodiment, is formed from a plastic plate attached to the upper surface 26 of the cover 24 on one side of the slot 32 only. This attachment is schematically shown with reference numeral 40 in Figs. 3 and 4.

During operation, the welding wire is withdrawn from the respective container through the inner portion 36 of the slot. After the welding wire stored in the respective container has been entirely used, only a small loop 42 of welding wire (please see Fig. 1) remains in the container. The spacing means 34 ensures that the welding wire portion leading to the subsequent welding wire container is held spaced apart from the portion currently withdrawn from the container. This prevents any entanglement and kinks in the welding wire. If the welding wire is continued to be withdrawn from the container, loop 42 bends spacing means 34 upwardly on the side opposite attachment 40 so that the welding wire entirely escapes from the first container. The system then automatically continues to withdraw the welding wire from the second container.

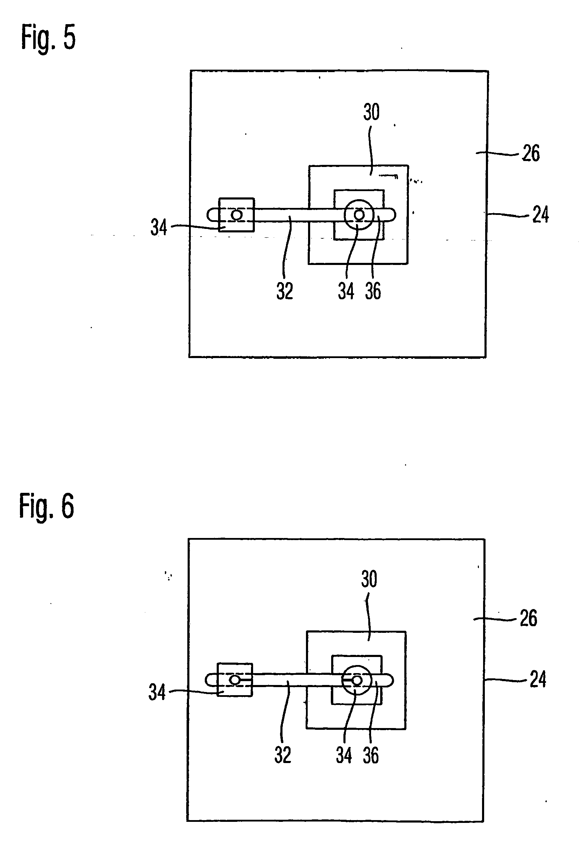

Figure 5 shows a cover in which the spacing means is formed from two separate adhesive paper labels attached to the cover spaced from each other. One of the labels holds the end portion 18 of the welding wire in the outer portion 38 of the slot 32, and a second label holds the wire portion currently withdrawn in the inner portion 36 of the slot. When the system is switching from the currently used container to the subsequently used container, the paper labels are ruptured so as to allow the welding wire to escape from the container through the slot.

Figure 6 shows a third embodiment which largely corresponds to the second embodiment. In the third embodiment, the two labels are formed from a stronger material such as plastic, leather or cardboard. In order to allow the welding wire to escape through the slot when switching from the currently used container to the subsequently used container, the labels are provided with a preformed cut which makes it easier for the welding wire to escape from the labels.

## Claims

1. A combination of a cover (24) and a welding wire container (10, 12) containing welding wire, the cover having an upper surface (26) provided with a slot (32) through which the welding wire (16) can be withdrawn from the container, **characterized in that** the slot (32) has spacing means (34) which define an inner portion (36) and an outer portion (38) of the slot such that welding wire extending through the inner portion of the slot is held spaced from welding wire extending through the outer portion of the slot, and **in that** the spacing means (14) is formed so as to be deflectable such that the welding wire is allowed to pass the spacing means when the spacing means is in a deflected condition.

2. The combination of claim 1, **characterized in that** the spacing means (34) is formed such as its spacing effect can be overcome by the welding wire.

3. The combination of claim 1 or claim 2, **characterized in that** the spacing means (34) is attached to the cover (24) so as to be at least partially detachable from the cover.

4. The combination of any of claims 1 to 3, **characterized in that** the spacing means is formed so as to be destructible.

5. The combination of any of the preceding claims, **characterized in that** the spacing means (34) is formed from an adhesive strip.

6. The combination of any of claims 1 to 4, **characterized in that** the spacing means (34) is formed from a label attached to the cover.

7. The combination of claim 5 or claim 6, **characterized in that** the spacing means (34) is formed from an inner label and an outer label.

8. The combination of claim 7, **characterized in that** the inner and outer labels each have an opening for the welding wire.

9. The combination of claim 5, **characterized in that** the spacing means (34) is formed from a single adhesive strip.

10. The combination of any of claims 1 to 4, **characterized in that** the spacing means (34) is a plate attached to the upper surface (26) of the cover (24).

11. The combination of claim 10, **characterized in that** the plate is attached to the upper surface of the cover on one side of the slot (32), only.

12. The combination of any of the preceding claims, **characterized in that** the spacing means (34) consists of plastics.

13. The combination of claim 1, **characterized in that** the spacing means consists of at least one narrow portion of the slot at which the edges of the slot are arranged opposite each other with a distance which is smaller than the diameter of the welding wire.

14. The combination of any of the preceding claims, **characterized in that** the slot (32) extends from an edge of the cover towards the center and beyond the center.

15. The combination of any of the preceding claims, **characterized in that** an elevated portion (30) is provided in the center of the cover.

16. The combination of claim 15, **characterized in that** the elevated portion has the shape of a truncated cone.

17. The combination of claim 15, **characterized in that** the elevated portion has the shape of a truncated pyramid (30).

18. The combination of claim 17, **characterized in that** the slot (32) crosses one side surface and the top surface of the truncated pyramid and extends over almost the entire opposite side surface of the truncated pyramid.

19. The combination of any of the preceding claims, **characterized in that** the slot (32) has a width of approximately 20 mm.

## Patentansprüche

1. Kombination aus einer Abdeckung (24) und einem Schweißdrahtbehälter (10, 12), der Schweißdraht enthält, wobei die Abdeckung eine obere Fläche (26) aufweist, die mit einem Schlitz (32) versehen ist, durch den der Schweißdraht (16) aus dem Behälter abgezogen werden kann, **dadurch gekennzeichnet, dass** der Schlitz (32) Abstandshaltermittel (34) aufweist, die einen inneren Abschnitt (36) und einen äußeren Abschnitt (38) des Schlitzes so definieren, dass durch den inneren Abschnitt des Schlitzes verlaufender Schweißdraht von durch den äußeren Abschnitt des Schlitzes verlaufendem Schweißdraht im Abstand gehalten wird, und dass das Abstandshaltermittel (34) auslenkbar ausgebildet ist, derart, dass der Schweißdraht an dem Abstandshaltermittel vorbeilaufen kann, wenn das Abstandshaltermittel in einem ausgelenkten Zustand ist.

2. Kombination nach Anspruch 1, **dadurch gekennzeichnet, dass** das Abstandshaltermittel (34) so ausgebildet ist, dass seine Abstandswirkung durch den Schweißdraht überwunden werden kann.

3. Kombination nach Anspruch 1 oder Anspruch 2, **dadurch gekennzeichnet, dass** das Abstandshaltermittel (34) so an der Abdeckung (24) befestigt ist, dass es wenigstens teilweise von der Abdeckung lösbar ist.

4. Kombination nach einem der Ansprüche 1 bis 3, **dadurch gekennzeichnet, dass** das Abstandshaltermittel zerstörbar ausgebildet ist.

5. Kombination nach einem der vorhergehenden Ansprüche, **dadurch gekennzeichnet, dass** das Abstandshaltermittel (34) aus einem Klebestreifen gebildet ist.

6. Kombination nach einem der Ansprüche 1 bis 4, **dadurch gekennzeichnet, dass** das Abstandshaltermittel (34) aus einem an der Abdeckung befestigten Etikett gebildet ist.

7. Kombination nach Anspruch 5 oder Anspruch 6, **dadurch gekennzeichnet, dass** das Abstandshaltermittel (34) aus einem inneren und einem äußeren Etikett gebildet ist.

8. Kombination nach Anspruch 7, **dadurch gekennzeichnet, dass** das innere und das äußere Etikett jeweils eine Öffnung für den Schweißdraht aufweisen.

9. Kombination nach Anspruch 5, **dadurch gekennzeichnet, dass** das Abstandshaltermittel (34) aus einem einzigen Klebestreifen gebildet ist.

10. Kombination nach einem der Ansprüche 1 bis 4, **dadurch gekennzeichnet, dass** das Abstandshaltermittel (34) eine an der oberen Fläche (26) der Abdeckung (24) befestigte Platte ist.

11. Kombination nach Anspruch 10, **dadurch gekennzeichnet, dass** die Platte an der oberen Fläche der Abdeckung nur an einer Seite des Schlitzes (32) befestigt ist.

12. Kombination nach einem der vorhergehenden Ansprüche, **dadurch gekennzeichnet, dass** das Abstandshaltermittel (34) aus Kunststoff besteht.

13. Kombination nach Anspruch 1, **dadurch gekennzeichnet, dass** das Abstandshaltermittel aus wenigstens einem schmalen Abschnitt des Schlitzes besteht, an dem die Kanten des Schlitzes einander gegenüberliegend mit einem Abstand, der geringer als der Durchmesser des Schweißdrahtes ist, angeordnet sind.

14. Kombination nach einem der vorhergehenden Ansprüche, **dadurch gekennzeichnet, dass** der Schlitz (32) von einer Kante der Abdeckung zur Mitte hin und über diese hinaus verläuft.

15. Kombination nach einem der vorhergehenden Ansprüche, **dadurch gekennzeichnet, dass** in der Mitte der Abdeckung ein erhöhter Abschnitt (30) vorgesehen ist.

16. Kombination nach Anspruch 15, **dadurch gekennzeichnet, dass** der erhöhte Abschnitt die Form eines Kegelstumpfes hat.

17. Kombination nach Anspruch 15, **dadurch gekennzeichnet, dass** der erhöhte Abschnitt die Form eines Pyramidenstumpfes (30) hat.

18. Kombination nach Anspruch 17, **dadurch gekennzeichnet, dass** der Schlitz (32) eine Seitenfläche und die Oberseite des Pyramidenstumpfes überquert und sich über fast die gesamte gegenüberliegende Seitenfläche des Pyramidenstumpfes erstreckt.

19. Kombination nach einem der vorhergehenden Ansprüche, **dadurch gekennzeichnet, dass** der Schlitz (32) eine Breite von ungefähr 20 mm hat.

## Revendications

1. Combinaison d'un couvercle (24) et d'un réceptacle (10, 12) de fil à souder qui contient du fil à souder, le couvercle présentant une face supérieure (26) pourvue d'une fente (32) à travers laquelle le fil à souder (16) peut être retiré du réceptacle, **caractérisée en ce que** la fente (32) présente un moyen d'écartement (34) définissant un tronçon intérieur (36) et un tronçon extérieur (38) de la fente de telle sorte que du fil à souder s'étendant à travers le tronçon intérieur de la fente est maintenu à distance du fil à souder s'étendant à travers le tronçon extérieur de la fente, et **en ce que** le moyen d'écartement (34) est réalisé de manière à pouvoir être dévié de telle sorte que le fil à souder peut passer par le moyen d'écartement lorsque le moyen d'écartement se trouve dans un état dévié.

2. Combinaison selon la revendication 1, **caractérisée en ce que** le moyen d'écartement (34) est réalisé de manière à ce que son effet d'écartement puisse être surmonté par le fil à souder.

3. Combinaison selon la revendication 1 ou la revendication 2, **caractérisée en ce que** le moyen d'écartement (34) est fixé au couvercle (24) de manière à être au moins partiellement détachable du couvercle.

4. Combinaison selon l'une des revendications 1 à 3, **caractérisée en ce que** le moyen d'écartement est réalisé de manière à être destructible.

5. Combinaison selon l'une des revendications précédentes, **caractérisée en ce que** le moyen d'écartement (34) est formé à partir d'une bande adhésive.

6. Combinaison selon l'une des revendications 1 à 4, **caractérisée en ce que** le moyen d'écartement (34) est formé d'une étiquette attachée au couvercle.

7. Combinaison selon la revendication 5 ou la revendication 6, **caractérisée en ce que** le moyen d'écartement (34) est formé d'une étiquette intérieure et d'une étiquette extérieure.

8. Combinaison selon la revendication 7, **caractérisée en ce que** les étiquettes intérieure et extérieure ont chacune une ouverture pour le fil à souder.

9. Combinaison selon la revendication 5, **caractérisée en ce que** le moyen d'écartement (34) est formé d'une seule bande adhésive.

10. Combinaison selon l'une des revendications 1 à 4, **caractérisée en ce que** le moyen d'écartement (34) est une plaque fixée à la face supérieure (26) du couvercle (24).

11. Combinaison selon la revendication 10, **caractérisée en ce que** la plaque est fixée à la face supérieure du couvercle seulement d'un côté de la fente (32).

12. Combinaison selon l'une des revendications précédentes, **caractérisée en ce que** le moyen d'écartement (34) est en matière plastique.

13. Combinaison selon la revendication 1, **caractérisée en ce que** le moyen d'écartement est composé d'au moins un tronçon étroit de la fente où les bords de la fente sont agencés opposés les uns aux autres avec une distance inférieure au diamètre du fil à souder.

14. Combinaison selon l'une des revendications précédentes, **caractérisée en ce que** la fente (32) s'étend depuis un bord du couvercle vers le centre et au-delà du centre.

15. Combinaison selon l'une des revendications précédentes, **caractérisée en ce qu'**un tronçon surélevé (30) est prévu au centre du couvercle.

16. Combinaison selon la revendication 15, **caractérisée en ce que** le tronçon surélevé a la forme d'un tronc de cône.

17. Combinaison selon la revendication 15, **caractérisée en ce que** le tronçon surélevé a la forme d'une pyramide tronconique (30).

18. Combinaison selon la revendication 17, **caractérisée en ce que** la fente (32) traverse une face latérale et une face supérieure de la pyramide tronconique et s'étend sur presque toute la face latérale opposée de la pyramide tronconique.

19. Combinaison selon l'une des revendications précédentes, **caractérisée en ce que** la fente (32) présente une largeur d'environ 20 mm.
